# EUROPÄISCHE PATENTSCHRIFT

(11) **EP 1 299 467 B1**
(45) Veröffentlichungstag und Bekanntmachung des Hinweises auf die Patenterteilung: **07.11.2012**
(21) Anmeldenummer: 01953790.1
(22) Anmeldetag: 14.06.2001
(51) Int. Cl.: C08K 9/04, C09K 19/38

(54) **VERFAHREN ZUR HERSTELLUNG NANOVERSTÄRKTER, THERMOPLASTISCHER POLYMERER**
METHOD FOR PRODUCING NANOREINFORCED THERMOPLASTIC POLYMERS
PROCEDE DE PRODUCTION DE POLYMERES THERMOPLASTIQUES RENFORCES PAR REPARTITION NANOMETRIQUE

(30) Priorität: 14.06.2000 DE 10029103; 13.06.2001 DE 10128356
(43) Veröffentlichungstag der Anmeldung: 09.04.2003
(73) Patentinhaber: THÜRINGISCHES INSTITUT FÜR TEXTIL- UND KUNSTSTOFF-FORSCHUNG e.V., 07407 Rudolstadt-Schwarza (DE)
(72) Erfinder: HEINEMANN, Klaus, 07407 Rudolstadt (DE); TAEGER, Eberhard, 07407 Weissbach ü. Rudolstadt (DE); MEUSEL, Erich, 98746 Katzhütte (DE); MÜLLER, Wolfgang, 07407 Rudolstadt (DE)
(74) Vertreter: Plate, Jürgen
(86) Internationale Anmeldenummer: PCT/DE2001/002192
(87) Internationale Veröffentlichungsnummer: WO 2001/096459

(56) Entgegenhaltungen:
- EP-A- 0 896 029
- US-A- 4 328 041
- US-A- 4 405 727

## Beschreibung

Die Erfindung betrifft ein Verfahren zur Herstellung nanoverstärkter, thermoplastischer Polymerer, vorzugsweise Polyamide, Polyester oder Polycarbonate, die durch kovalente Anbindung oder direkten Einbau von speziell modifizierten Schichtsilikatpartikeln in Nanoverteilung eine Verbesserung der chemischen Stabilität ihrer Eigenschaften erfahren. Als Schichtsilikate dienen natürliche und/oder synthetische, durch Kationenaustausch organophil eingestellte Produkte.

### [Stand der Technik]

Aus der Literatur ist die Verwendung organophiler Schichtsilikate als Füll-und Verstärkungsmittel für Polymere bekannt. Bereits die ersten Arbeiten bei Toyota in den achtziger Jahren begründeten einen Weg (DE 36 32 865 und US 4,810,734), der auch jetzt noch beschritten wird. Die wesentlichen Schritte bestehen darin, dass ein hydrophiles Schichtsilikat durch Ionenaustausch mittels anorganischer Ionen bzw. organischer Kationen wie Dodecylammoniumionen, die unter Umständen noch eine Carboxylgruppe tragen, für Monomere oder Polymere quellfähig gemacht wird. Derart modifizierte Schichtsilikate werden mit dem Monomeren vermischt, so dass durch das Eindringen des Monomeren zwischen die Schichten eine Schichtaufweitung erfolgt. Bei der anschließenden Polymerisation des Monomeren erfolgt eine Anbindung des entstehenden Polymeren über z. B. Amidbindungen an die durch den Austausch eingebrachten anorganischen oder organischen Kationen, die ihrerseits über ionische Bindungen mit dem Schichtsilikat verknüpft sind.

Diese ionischen Bindungen sind unter Bedingungen, bei denen die kovalenten Bindungen eine hohe Stabilität aufweisen, chemisch angreifbar, so dass die enge Verbindung zwischen Schichtsilikat und Polymeren instabil ist.

Ein Übersichtsartikel (Zilg, Reichert, Dietsche, Engelhardt, Mülhaupt; Kunststoffe 88, 1988,1812-1820)befaßt sich ausführlich mit dem beschriebenen Weg und dem sich daraus ergebenden, vielseitigen Eigenschaftspotential der Nanokomposite.

In der DE 44 05 745 wird die einfache, mechanische Verkapselung feinverteilter Füllstoffe mittels eines in-situ aus Carbonsäureanhydriden und Oxiranen gebildeten Polyesters beschrieben. Eine ähnliche Zusammensetzung der Komponenten beinhaltet die DE 199 20 879. Auch hierin wird die in-situ-Herstellung von Polyestern aus Carbonsäuren bzw. Carbonsäureanhydriden und Oxiranen als kennzeichnend herausgestellt, allerdings mit dem Unterschied, dass die Oxirangruppen auch mit dem Modifikator des anorganischen Füllstoffs bzw. mit dem modifizierten Füllstoff reagieren können. Das in diesem Patent beschriebene Verfahren läßt jedoch keinen Hinweis auf eine kovalente Bindung zwischen anorganischem Füllstoff und dem Polymeren erkennen. Auch gemäß oder DE 199 05 503 erfolgt die Verknüpfung zwischen Thermoplast und Schichtsilikat ausschließlich über ionische Gruppen. Die verwendeten Carbonsäuren bzw. Carbonsäureanhydride dienen als Monomere, um die ionischen Gruppen am Thermoplast auszubilden. All diesen Lösungen ist gemein, dass zwischen anorganischem Schichtsilikat und Polymeren keine kovalente Bindung besteht, und somit eine geringere Stabilität der Verbindung Schichtsilikat und Polymer resultiert.

Ein anderer Weg zur Herstellung von Nanokompositen wird in einem Patent von AlliedSignal beschrieben (WO 9311190). Hierbei werden Schichtsilikate mit geeigneten Reagenzien, z. B. organischen Ammoniumionen, wie üblich modifiziert und mit Organosilanen, die funktionelle Gruppen tragen, behandelt. Dabei ist wesentlich, dass ein Typ der reaktiven Gruppen des Organosilans kovalente Bindungen zur Oberfläche der interkalierten Lamellen des Schichtsilikates knüpft, während über die anderen reaktiven Gruppen des Organosilans die kovalente Verbindung zu dem entsprechenden Polymeren bzw. dessen Vorstufen aufgebaut wird. Im Ergebnis des Verfahrens entsteht ein Polymeres, das kovalent über ein Zwischenglied mit dem Schichtsilikat verbunden ist. Als Polymermatrix bei dieser Methode sind gemäß dem Patent Polyamide, Polyester, Polyolefine und Polyvinylverbindungen anwendbar.

Das darin beschriebene Verfahren stellt die kovalente Verknüpfung zwischen Polymer und Mineral über ein Organosilan als zwischenglied her. Dieses Verfahren muss mit Blick auf das verbindende Zwischenglied als relativ kostenaufwendig eingeschätzt werden. Zudem ist von Nachteil, dass die mittlere Bindungsenergie der Bindung Si-C, die direkt oder indirekt die Verknüpfung zum Polymeren bildet, deutlich geringer ist als die der Bindungen C-C bzw. C-O.

Ebenfalls eine kovalente Verbindung zwischen einer Schichtsilikatoberfläche und in diesem Falle einer dünnen Polymerschicht wird in US 4,480,005 und 4, 405, 727 beschrieben. Ziel des Verfahrens ist es, ein Verstärkungsmaterial für Polymere herzustellen, das aus einer teilchen- oder faserförmigen mineralischen Komponente besteht mit einer "polymer-interaktiven" Schicht auf diesen Teilchen. Die kovalente Bindung wird hergestellt durch Umsetzung bestimmter reaktiver Stellen der mineralischen Oberfläche mit geeigneten reaktiven Gruppen einer organischen Verbindung. Die reaktive Gruppe an der Mineraloberfläche ist typischerweise eine Hydroxylgruppe. Als "polymer-interaktives" Segment der organischen Verbindung wird ein Segment von beträchtlicher Länge bezeichnet, das in der Lage ist, sich in einer Polymerschmelze so zu verhalten, als wäre es ein Teil des Polymers. Der Zusatz des Verstärkungsmaterials zu Polymeren soll deren Eigenschaftsbild günstig beeinflussen. Bei der verwendeten teilchen- oder faserförmigen mineralischen Komponente handelt es sich zwar um ein Schichtsilikat, das aber nicht quellfähig ist. Der angegebene Wert für das aspect ratio von 20 bis 200 gilt dabei für Teilchenabmessungen von 100 bis 1000 *µ*m in Länge und Breite bei Schichtdicken von 1 bis 6 *µ*m.

Die in diesem Patent verfolgte Methode der Verwendung eines mineralischen Verstärkungsmaterials mit dünner Polymerschicht in den oben genannten Abmessungen schöpft die Möglichkeiten der Eigenschaftsverbesserung der Polymeren trotz geringer Korngröße der mineralischen Komponente nicht aus. Da das eingesetzte Mineral nicht quellfähig ist, wird auch keine Interkalierung erreicht. Diese jedoch ist die Voraussetzung für eine Nanoverteilung der mineralischen Komponente in der Polymermatrix.

### [Aufgabe der Erfindung]

Ziel der Erfindung ist es, ein Verfahren zur Herstellung nanoverstärkter thermoplastischer Polymerer, insbesondere Polyamide, Polyester oder Polycarbonate oder deren Copolymere, mit verbesserter Stabilität oder Verstärkungswirkung, erreichbaren, zusätzlichen Eigenschaftsverbesserungen, wie beispielsweise verbesserte Reißdehnung von Fasern und Filamenten, zu entwickeln, deren Ergebnis chemisch stabil und zugleich kostengünstig herstellbar ist.

Dieses Ziel wird erfindungsgemäß dadurch erreicht, indem unter Verwendung von Carbonsäuren und/oder Carbonsäureanhydriden und/oder Anhydridgruppen flüssig-kristallinen, Anhydridgruppen tragenden Polyesterimidanhydriden modifizierte Schichtsilikat-Partikel, die durch Veresterungen der Hydroxylgruppen des Schichtsilikats gebildet werden und in einer Schmelze entsprechender Monomerer in Nanoverteilung vorliegen, über kovalente Bindungen, die, mit dem sich bildenden Polymeren verknüpft werden. Erfindungsgemäß können auch die unter Verwendung von Carbonsäuren und/oder Carbonsäureanhydriden und/oder Anhydridgruppen flüssig-kristallinen, Anhydridgruppen tragenden Polyesterimidanhydride modifizierten Schichtsilikat-Partikel Polymeren zugesetzt und in der Schmelze zur Reaktion gebracht werden.

Gegenstand der Erfindung ist demgemäß ein Verfahren zur Herstellung thermoplastischer Polymere, die mit modifizierten Schichtsilikaten verstärkt sind, das dadurch gekennzeichnet ist, dass als Schichtsilikate durch Ionenaustausch organophil eingestellte Nanopartikel eingesetzt werden, deren an der Oberfläche liegenden Hydroxylgruppen mit Carbonsäuren und/oder Carbonsäureanhydriden und/oder Anhydridgruppen tragenden flüssig-kristallinen Polyesterimidanhydriden verestert sind.

Das erfindungsgemäße Verfahren zur Herstellung der nanoverstärkten thermoplastischen Polymere umfasst folgende Stufen:
● Modifizierung eines durch Ionenaustausch organophil eingestellten Schichtsilikates durch Veresterung von Hydroxylgruppen an seiner Oberfläche mit Carbonsäuren und/oder Carbonsäureanhydriden und/oder Anhydridgruppen Anhydridgruppen tragenden Polyesterimidanhydriden sowie gegebenenfalls Umsetzung freier Carboxylgruppen des Reaktionsproduktes mit Aminen;
● Mischen des speziell modifizierten Schichtsilikates in Mengen von 0,1-50 %, bezogen auf den Gesamtansatz mit dem bzw. den Monomeren bzw. den Polymeren, gegebenenfalls unter Zusatz weiterer Substanzen wie ε-Amino capronsäure, Aminsalze, Cyclohexylaminhydrochlorid, Wasser als Initiatoren, Alkali- oder Erdalkali- Metalle, - Hydride, -Hydroxide, - Carbonate oder Grignardverbindungen als Katalysatoren, N-Acetylcaprolactam, N-Caproylcaprolactam, N,N'-Tetraacetylhexamethylendiamin als Aktivatoren;
● Polymerisation bzw. Polykondensation bzw. Reaktion des Gemisches bei erhöhten Temperaturen im Bereich von 68 °C bis 300 °C.

Als Schichtsilikate im erfindungsgemäßen Verfahren können beliebige quellfähige, natürliche und/oder synthetische durch Ionenaustausch organophil eingestellte Tonminerale, besonders Phyllosilikate wie Montmorillonit, Hektorit, Illit, Vermikulit und/oder andere verwendet werden. Bei der Wahl der entsprechenden Schichtsilikate sollte beachtet werden, dass natürliche Produkte wie z. B. Bentonit oft eine mehr oder weniger starke Verfärbung des resultierenden Nanokomposites zur Folge haben. Wichtig ist, dass die Schichtsilikate durch einen Austausch ihrer Zwischenschicht-Kationen gegen geeignete organische Kationen, wie z. B. Dimethyldistearyl- oder Dicitethylstearylbenzyl-Ammoniumionen, für organische Lösungsmittel und/oder Monomere quellfähig gemacht wurden, wobei das Aspektverhältnis > 100 sein soll.

Diese organophilen Schichtsilikate werden mit Carbonsäuren und/oder Carbonsäureanhydriden, wie beispielsweise Benzol-1,3,5-tricarbonsäure, Benzol-1,2,4-tricarbonsäure (Trimellitsäure) bzw. deren Anhydrid (Trimellitsäureanhydrid), Benzol-1,2,4,5-tetracarbonsäure (Pyromellitsäure) bzw. deren Dianhydride (Pyromellitsäuredianhydrid), 3,3',4,4'-Benzophenontetracarbonsäuredianhydrid, Maleinsäureanhydrid, Pentandisäure, Tetrahydropyran-2,6-dion, 5-(2,5-Dioxatetrahydrofuryl)-3-methyl-3-cyclo-hexan oder Phthalsäureanhydride , und/oder Anhydridgruppen tragenden Polyesterimidanhydriden mit flüssig-kristallinem Charakter, insbesondere Polyesterimidanhydride mit unterschiedlicher Kettenlänge und mit terminalen und unterschiedlicher Anzahl an lateralen Anhydridgruppen, wie sie in der DE 43 42 705 beschrieben sind, behandelt, so dass eine oder mehrere Hydroxylgruppen der Schichtsilikat-Partikel verestert werden. Die Schichtsilikate werden vor der Umsetzung mit einem geeigneten organischen Lösungsmittel gequollen, so dass die Hydroxylgruppen den Reaktionspartnern zugänglich sind. Die Reaktionspartner werden so gewählt, dass, wenn erforderlich nach der Umsetzung am Reaktionsprodukt noch freie Carboxyl- bzw. Anhydridgruppen vorhanden sind.

Das auf diese Art modifizierte, organophile Schichtsilikat wird gegebenenfalls in einem weiteren Schritt mit einem Amin behandelt. Auch für diese Umsetzung wird das modifizierten Schichtsilikat in einem organischen Lösungsmittel, wie z. B. Decan, gequollen, um zu gewährleisten, dass die vorhandenen freien Carboxyl- bzw. Anhydridgruppen für den Reaktionspartner zugänglich sind. Bei der nunmehr erfolgenden Umsetzung mit Aminen, die zwei oder mehrere Aminogruppen am Molekül tragen, beispielsweise 1,4-Diaminobutan, 1,6-Diaminohexan, 1,8-Diaminooctan, 1,10-Diaminodecan, 1,12-Diaminododecan, Isophorondiamin o. a. ist der Zusatz so zu wählen, dass das Reaktionsprodukt annähernd den gleichen Gehalt an freien Carboxyl- und freien Aminogruppen aufweist.

Die Reaktionsprodukte aus dem ersten oder dem zweiten Umsetzungsschritt werden günstigerweise zerkleinert, vorzugsweise gemahlen, z. B. in einer Labormühle, um sie so besser dosieren und leichter interkalieren zu können. Anschließend werden sie in Mengen von 0,1-50 % mit den Monomeren, wie ε-Caprolactam, Önanthlactam, Capryllactam, Lauryllactam bzw. polyamidbildenden Kombinationen von C₆-C₁₂-Dicarbonsäuren und/oder cycloaliphatischen und/oder aromatischen Dicarbonsäuren mit C₄-C₁₂-Diaminen und/oder cycloaliphatischen und/oder aromatischen Diaminen oder Mischungen dieser Monomeren, sowie polyesterbildenden Kombinationen von aliphatischen und/oder cycloaliphatischen und/oder aromatischen Dicarbonsäuren und Diolen und eventuell weiteren Zusätzen gemischt und über deren Schmelzpunkt erhitzt. Unter Rühren werden die modifizierten, organophilen Schichtsilikate in den Monomeren gequollen und gleichmäßig verteilt. Hierbei erfolgt eine Aufweitung der Zwischenschichtabstände durch die eindringenden Monomeren.

Bei weiterer Erhöhung der Temperatur bis zur Polymerisations- bzw. Polykondensationstemperatur setzt die Bildung des Polymeren ein. Dabei werden, bedingt durch die reaktiven Gruppen am eingesetzten modifizierten Schichtsilikat, kovalente Bindungen zwischen den organischen Resten der Nanopartikel und den Monomeren bzw. den sich bildenden Polymeren aufgebaut. Im Falle der Herstellung von Polyamid-Nanokompositen aus Lactamen als Monomeren fungieren die modifizierten Schichtsilikat-Partikel als Polymerisationsinitiatoren in der Form, dass an den freien Aminogruppen der Kettenaufbau einsetzt. Werden die modifizierten Schichtsilikate in Polykondensationsreaktionen eingesetzt, so dienen sie über ihre reaktiven Gruppen als Kettenbausteine.

Die Kettenlänge der erfindungsgemäßen Polymer-Nanokomposite kann sowohl mittels der bekannten Methoden als auch speziell bei Polymerisationsreaktionen über den Zusatz an modifiziertem Schichtsilikat und damit Polymerisationsinitiator gesteuert werden. Auf diese Art ist es möglich, auch Polymere mit relativ niedrigen Molmassen oder Oligomere herzustellen, die, abgestuft je nach der Molmasse, über unterschiedliche Gehalte an Nanopartikeln verfügen. Die Polymerisationsdauer kann bis zu 24 Stunden betragen. Der Verlauf des Kettenaufbaues läßt sich während der Polymerisation z. B. durch die Aufnahme des Drehmoments, das für das Rühren der Schmelze aufgebracht werden muß, verfolgen. Das entstandene Polymere wird nach den bekannten Analysenmethoden charakterisiert.

Die erfindungsgemäßen Nanokomposite können ohne Beeinträchtigung der engen Verbindung zwischen Polymer und Schichtsilikat-Partikeln sowie deren Verteilung im Polymeren bearbeitet, in Lösung oder in Schmelze gebracht oder auch in geeigneter weise recycliert werden. Sie können mit anderen, keine Nanopartikel enthaltenden, gleichen oder mit ihnen verträglichen polymeren Grundkörpern gemischt werden.

Bei Verwendung von modifizierten Schichtsilikaten, die unter Einsatz von flüssig-kristallinen Polyesterimidanhydriden zur Modifizierung der organophilen Schichtsilikate hergestellt wurden, ergeben sich zusätzliche Eigenschaftsverbesserungen der entstehenden Polyamide, Polyester, Polycarbonate oder anderen Polymeren, da die flüssig-kristallinen Anteile zu einer Mikrophasenverstärkung führen und zudem als Verträglichkeitsvermittler zwischen üblicherweise unverträglichen Polymeren wie Polyamiden und Polyestern wirken.

Die erfindungsgemäßen Nanokomposite weisen neben anderen günstigen Eigenschaften verbesserte mechanische Eigenschaften wie Erhöhung der Steifigkeit und der Schlagzähigkeit sowie eine höhere Wärmeformbeständigkeit und bessere Sperrwirkung gegen Permeation von Gasen und Flüssigkeiten auf. Um diesen positiven Einfluss zu erreichen, enthalten die Nanokomposite einen Schichtsilikatanteil zwischen 0,1 und 50 Gew.-%, vorzugsweise zwischen 0,5 und 5 Gew.-%.

Ausführungsformen der Erfindung sind unter anderem aliphatische Polyamidfasern und -filamente und Polyesterfasern und - filamente, insbesondere solche aus Polyethylenterephthalat oder Polybutylenterephthalat sowie aus Polycarbonaten, welche im geringen Umfang die beschriebenen Zusätze aufweisen. Es ist bekannt, dass sich Fasern bzw. Filamente, welche kleine Mengen an Zusatzstoffen enthalten, je nach Zusammensetzung der Mischung, über Schmelzspinnen verarbeiten lassen und teilweise bei gleicher Abzugsgeschwindigkeit einen Anstieg in der Reißdehnung im unverstreckten Garn hervorbringen können. Die erfindungsgemäßen Polymermischungen für die Herstellung von Polyamid-, Polyester- sowie Polycarbonatfasern und - filamenten sollten um gut spinnbar zu sein, vorzugsweise nicht mehr als 6 % Zusatzmittel enthalten, wobei das Herstellungsverfahren durch die geringe Zusatzmenge, eine breite Verfügbarkeit des Zusatzmittels und durch eine starke Erhöhung der Reißdehnung eine hohe Wirtschaftlichkeit aufweisen soll.

Überraschenderweise hat sich gezeigt, dass durch den Anteil der flüssig-kristallinen Polyesterimidanhydride bereits in den unorientierten Polymergemischen die Zusatzmittel eine stäbchenförmige, gestreckte Gestalt besitzen, die zur verbesserten Spinnbarkeit und Verstreckbarkeit führen. Bemerkenswert ist ebenfalls, dass die lateralen Durchmesser der stäbchenförmigen Gebilde sehr klein sind. Die stäbchenförmigen Einlagerungen weisen beispielsweise einen lateralen Durchmesser von etwa 300 bis 400 nm auf, gemessen in den aus der Spinndüse extrudierten, noch unorientierten Schmelzefäden. Wichtig ist, dass der Durchmesser kleiner als 800 nm ist. Bevorzugt ist eine Größe von weniger als 600 nm, besonders bevorzugt von weniger als 400 nm. Generell ist die vorliegende Erfindung sowohl für die Herstellung von teilweise orientierten Garnen (POY) geeignet als auch für die Herstellung von Fasern (d. h. Stapelfasern), bei der deutlich langsamer gesponnen, dafür aber anschließend viel stärker verstreckt wird (wie aus Ullmann's Encyklopedia of Industrial Chemistry, 5th Ed., Vol. A10, Fibers, 3. General Production Technology, S. 550 bis 561 bekannt ist). Der wirtschaftliche Gewinn der vorliegenden Erfindung äußert sich im Fall der Faserherstellung vor allem in einem deutlich erhöhten Streckverhältnis auf der Faserstraße, neben dem entsprechend höheren Durchsatz beim Schmelzspinnen. Bei der Herstellung von Fasern mit der vorliegenden Erfindung wird vorzugsweise eine Abzugsgeschwindigkeit im Bereich von 400 bis 2.400 m/min gewählt, bei der Herstellung von teilweise orientierten Filamentgarnen (POY) eine Abzugsgeschwindigkeit von 3.000 bis 8.000 m/min.

In einer besonderen Ausführungsform der Erfindung wird ein modifiziertes, anhydridgruppenhaltiges, unter Einsatz eines Polyesterimidanhydrides mit einer Molmasse von > 10.000 g/mol als Modifizierungskomponente umgesetztes, organophiles Schichtsilikat einer Polymerschmelze, z. B. einer Polyamid - oder Polyesterschmelze, in einem Extruder zugesetzt und nach einer für die kovalente Anbindung des modifizierten, anhydridgruppenhaltigen Schichtsilikates an das Polymer ausreichenden Verweilzeit extrudiert. Es ist weiterhin möglich, obiges speziell modifiziertes Schichtsilikat in Granulat - oder Pulverform direkt dem Polymergranulat in einem Spinnextruder zuzudosieren und anschließend die Schmelzemischung zu verspinnen. Das Polymer, z. B. Polyethylenterephthalat selbst kann auch bereits die üblichen Zusatzstoffe wie Mattierungsmittel (Titandioxid), Stabilisatoren u. a. enthalten.

Bei dem erfindungsgemäßen Verbund zwischen Polymer und Schichtsilikat durch kovalente Bindungen über end- und seitenständige Anhydridgruppen der flüssig-kristallinen Polyesterimidanhydride ergibt sich ein starker Widerstand des resultiernden Polymers gegen eine thermische und mechanische Verformung. Dies drückt sich in den hohen mechanischen Festigkeiten sowie den ausgezeichneten thermischen Eigenschaften der Materialien aus. Ihre hohe Formbeständigkeit, Abriebfestigkeit, glatte Beschaffenheit der Oberfläche, Wasserundurchlässigkeit und Wasserbeständigkeit ergibt sich aus der gleichmäßigen Verteilung der Silikatschichten. Eine Versprödung und andere Schwierigkeiten, die bei herkömmlichen Verbundmaterialien mit einem Gehalt an anorganischen Additiven unvermeidlich sind, werden beseitigt, da die Silikatschichten in der Ordnung von Molekülen fein dispergiert und fest mit den Ketten der organischen Moleküle verbunden sind.

Die weitere Ausgestaltung der Erfindung ergibt sich aus den Ausführungsbeispielen sowie den Patentansprüchen.

### [Beispiele]

### Beispiel 1

Zur Herstellung eines modifizierten Schichtsilikates wird ein durch Kationenaustausch mit Dimethylstearylbenzyl-Ammoniumionen organophil eingestellter Bentonit verwendet.

23,6 g dieses handelsüblichen Produktes werden in 330 ml Butanon-2 unter Rühren bei 60°C dispergiert. Nach ca. 30 Minuten Rührdauer läßt man auf Zimmertemperatur abkühlen. Der vorliegenden Dispersion werden 3,9 g in 30 ml Butanon-2 gelösten Trimellitsäureanhydrids tropfenweise zugegeben. Nach dem Ende der Zugabe wird die Dispersion noch 1 Stunde unter Rückfluß behandelt. Anschließend wird auf ca. 60°C abgekühlt, der Rückflußkühler gegen einen Liebigkühler ausgetauscht und das Lösungsmittel abdestilliert, wobei gegen Ende der Destillation Reste des Lösungsmittels unter Vakuum entfernt werden. Das zurückbleibende Produkt wird in einer Mühle zerkleinert. Es weist einen Carboxylgruppengehalt von 1772 µequ./g auf.

Zum nächsten Schritt, der Amidierung des erhaltenen Produktes, werden 2,8 g 1,6-Diaminohexan in 100 ml Decan gelöst und auf 100°C erwärmt. Unter Rühren wird das im vorigen Schritt erhaltene Produkt eingetragen. Danach wird innerhalb von 40 Minuten die Temperatur auf 140°C erhöht. Es folgt eine Stunde Rührzeit, während der das Produkt allmählich quillt. Anschließend wird unter Vakuum das Lösungsmittel vorsichtig abdestilliert. Das zurückbleibende Produkt ist pulvrig. Sein Carboxylgruppengehalt beträgt 1003 µequ./g und sein Aminogruppengehalt 999 µequ./g.

5 g des auf die beschriebene Art modifizierten Schichtsilikates werden mit 95 g Caprolactam und 2 g Wasser gemischt und unter einem Stickstoffstrom von 10 ml/min und Rühren wird das Caprolactam aufgeschmolzen. Die Schmelze wird innerhalb von 40 Minuten auf 260°C erhitzt und nach ca. 11 Stunden Polymerisationsdauer aus dem Rührgefäß ausgegossen. Das Polymerisat enthält noch 15,1% Extrakt. Es weist einen Carboxylgruppengehalt von 127 µequ./g und einen Aminogruppengehalt von 53 µequ./g auf. Die relative Lösungsviskosität wurde zu 1,73 bestimmt. Das Polyamid zeigt einen Schmelzpunkt von 214°C. Sein Aschegehalt beträgt 3,30%.

### Beispiel 2

5 g des auf die im Beispiel 1 beschriebene Art modifizierten Schichtsilikates werden mit 95 g Caprolactam und 2 g Wasser gemischt und unter einem Stickstoffstrom von 10 ml/min und Rühren wird das Caprolactam aufgeschmolzen. Die Schmelze wird innerhalb von 40 Minuten auf 260°C erhitzt und nach 13,5 Stunden Polymerisationsdauer aus dem Rührgefäß ausgegossen. Das Polymerisat enthält noch 3,8% Extrakt. Es weist einen Carboxylgruppengehalt von 98,8 µequ./g und einen Aminogruppengehalt von 50 µequ./g auf. Die relative Lösungsviskosität wurde zu 2,08 bestimmt. Das Polyamid zeigt einen Schmelzpunkt von 217°C; sein Aschegehalt beträgt 2,86%.

### Beispiel 3

5 g des auf die im Beispiel 1 beschriebene Art modifizierten Schichtsilikates werden mit 95 g getrocknetem Caprolactam gemischt und unter einem Stickstoffstrom von 10 ml/min und Rühren wird das Caprolactam aufgeschmolzen. Nach einer Rührzeit von 20 Minuten werden 10 g getrocknetes, feinpulvriges Natriumcarbonat und 1,5 g N,N'-Tetraacetylhexamethylendiamin als Aktivator, zugegeben. Die Temperatur wird auf 220°C angehoben und die Schmelze noch 60 Minuten bei dieser Temperatur be-handelt.
Das Polymerisat wird zerkleinert, mit Wasser extrahiert und im Vakuumtrockenschrank bei 80°C getrocknet.

### Beispiel 4

52 g des analog dem ersten Schritt der Modifizierung im Beispiel 1 hergestellten modifizierten Bentonits werden mit 161,8 g Adipinsäure, 222,8 g Hydrochinondiacetat, 1,2 g Benzoesäure und 0,06 g Magnesiumoxid vermischt. Die Mischung wird bei einer Temperatur von 180°C unter Rühren in einem leichten Stickstoffstrom aufgeschmolzen. Nach Vorliegen einer homogenen Schmelze wird die Temperatur allmählich in Schritten von 10°C erhöht bis 260°C erreicht sind. Dabei destillieren ca. 130 g Essigsäure über. Durch Anlegen von Vakuum wird die Essigsäure-Abspaltung im Verlaufe von 2 bis 3 Stunden vervollständigt, wobei sich eine weitere Temperaturerhöhung auf 280°C notwendig macht.
Das erhaltene Polyester weist einen Carboxylgruppengehalt von 35 µequ./g auf. Sein Aschegehalt wurde zu 9,48% bestimmt.

### Beispiel 5

5 g eines auf die im Beispiel 1 beschriebene Art mit Dime-thylstearylbenzylammoniumchlorid organophil eingestellten synthetischen Dreischichtminerals Hektorit werden mit 18 g Caprolactam und 72 g AH-Salz gemischt und unter einem Stickstoffstrom von 10 ml/min und Rühren wird das Gemisch aufgeschmolzen. Die Schmelze wird innerhalb von 40 min. auf 265 °C erhitzt und nach ca. 7,5 Stunden Polykondensationsdauer aus dem Rührgefäß ausgegossen. Das Copolyamid enthält noch 1,5 % Extrakt. Es weist einen Carboxylgruppengehalt von 70 µequ/g und einen Aminogruppengehalt von 52 µequ/g.auf. Die relative Lösungsviskosität beträgt 2,11. Das Copolyamid zeigt einen Schmelzpunkt von 216 °C.

### Beispiel 6

Zur Herstellung eines modifizierten Schichtsilikates wird ein durch Kationenaustausch mit Dimethylstearylbenzyl-Ammoniumionen organophil eingestellter Bentonit verwendet. 23,6 g dieses handelsüblichen Produktes werden in 330 ml Butanon-2 unter Rühren bei 60°C dispergiert. Nach ca. 30 Minuten Rührdauer läßt man auf Zimmertemperatur abkühlen. Der vorliegenden Dispersion werden 40 g in 300 ml Butanon-2 dispergierten flüssig-kristallinen Polyesterimidanhydrids, das bei einer Molmasse von ca. 10.000 g/mol 6 Anhydridgruppen pro mol enthält, tropfenweise zugegeben. Nach dem Ende der Zugabe wird die Dispersion noch 1 Stunde unter Rückfluß behandelt. Anschließend wird auf ca. 60°C abgekühlt, der Rückflußkühler gegen einen Liebigkühler ausgetauscht und das Lösungsmittel abdestilliert, wobei gegen Ende der Destillation Reste des Lösungsmittels unter Vakuum entfernt werden. Das zurückbleibende Produkt wird in einer Mühle zerkleinert. Es weist einen Carboxylgruppengehalt von 769 *µ*equ/g auf.

### Beispiel 7

Um in diesem und dem nachfolgenden. Beispiel Vergleichsinformationen zu erhalten, wurden Kontrollfilamente unter identischen Bedingungen der Geschwindigkeit und Temperatur gesponnen, verstreckt und aufgespult, wobei ein Polymer verwendet wurde, das keine erfindungsgemäßen Zusatzstoffe enthielt, aber sonst die gleichen Eigenschaften besaß.

Ein Nanokompositverbundgranulat, erhalten aus 90 Teilen Polyamid 6 und 10 Teilen eines modifizierten, anhydridgruppenhaltigen, unter Einsatz eines Polyesterimidanhydrids entsprechend Beispiel 6 umgesetzten, organophilen Schichtsilikates, mit einer relativen Lösungsviskosität (gemessen in Schwefelsäure) von 3,06 und einem Melt-Flow-Index von 12 g/10 min wurde nach intensivem Trocknen im Vakuumtrockenschrank (80 °C, 8 Stunden) auf einem Hochtemperaturspinntester zu Monofilamenten bei einer Schmelzetemperatur von 259 °C und einer Spinngeschwindigkeit von 400 m/min mit einer Sollfeinheit von ca. 45 dtex verarbeitet und danach auf einer Labor-Reckeinrichtung der Fa. Reifenhäuser unter Variation der Prozeßparameter Temperatur und Reckverhältnis gereckt.

Mit dem Zusatz an modifiziertem Schichtsilikat konnte ein signifikant höheres Reckverhältnis realisiert werden, das auch seinen Niederschlag in den Festigkeitswerten fand. Tabelle 1 zeigt die textilen Daten der gereckten Filamente.

**Tabelle 1: Herstellung von Polyamid-Monofilen**

| | 10 % Zusatz | Nullprobe |
|---|---|---|
| Reckverhältnis | 1:4,87 | 1:3,67 |
| Feinheit [tex] | 0,98 | 1,14 |
| feinheitsbez. Reißkraft [cN/tex] | 78 | 65 |
| Anfangsmodul [MPa] | 3.540 | 2.467 |

### Beispiel 8

Die Granulate aus originärem PET (IV: 0,97; MFI: 23 g/10 min) und eines PET-Nanoschichtsilikat-LCP-Verbundes (IV: 1,03; MFI: 18 g/10 min), bestehend aus 90 Teilen PET und 10 Teilen eines modifizierten, anhydridgruppenhaltigen, unter Einsatz eines Polyesterimidanhydrids entsprechend Beispiel 6 umgesetzten, organophilen Schichtsilikates, wurden 24 Stunden bei 168 °C und 0,08 mbar getrocknet und auf einem Hochtemperaturspinntester mit einer Sollfeinheit von 4,4 dtex mit 6 Einzelkapillaren verarbeitet. Die Schmelzetemperatur betrug 295 °C und die Abzugsgeschwindigkeit 400 m/min. Die so hergestellten Filamente wurden nach einer Lagerung von 48 Stunden auf einer Labor-Reckeinrichtung unter Variation des Prozeßparameters Temperatur (Heizschiene) zwischen 180 und 200 °C gereckt und dabei die Reckgrenze und das stabile Reckverhältnis ermittelt. Es zeigte sich, dass sich die PET-Nanoschichtsilikat-LCP-Verbunde wesentlich höher recken ließen als das Vergleichs-PET. Die textilen Werte im Vergleich zur Nullprobe sind Tabelle 2 zu entnehmen.

**Tabelle 2: Textile Werte von PET-Filamenten**

| | PET-Nanokomposit | Nullprobe |
|---|---|---|
| Reckverhältnis | 1:3, 95 | 1:3,08 |
| Feinheit [tex] | 8,02 | 9,12 |
| Dehnung [%] | 24,2 | 31 |
| feinheitsbez. Reißkraft [cN/tex] | 22,57 | 14,87 |

### Beispiel 9

Ein Polycarbonat PC-CU wurde intensiv im Vakuumtrockenschrank bei 0,1 mbar und 160 °C während 8 Stunden getrocknet. 90 Teile des vorbehandelten Polycarbonats wurden mit 10 Teilen eines modifizierten, anhydridgruppenhaltigen Polycarbonats, unter Einsatz eines Polyesterimidanhydrids entspr. Beispiel 1 umgesetzten, organophilen Montmorillonits auf einem Hochtemperaturspinntester bei einer Schmelztemperatur von 295 °C und einer Spinngeschwindigkeit von 400 m/min. zu Monofilamenten mit einer Feinheit von 1030 µm versponnen.

Durch den Zusatz des speziellen, modifizierten Schichtsilikates konnte ein Produkt mit Festigkeitswerten von 18,5 cN/tex und einer Dehnung von 9,5 % erhalten werden.

### Beispiel 10

5 g eines auf die im Beispiel 1 beschriebene Art mit Dimethylstearylbenzylammoniumchlorid organophil eingestellten und modifizierten synthetischen Dreischichtminerals Hektorit werden mit 18 g Caprolactam und 72 g AH-Salz gemischt und unter einem Stickstoffstrom von 10 ml/min und Rühren wird das Gemisch aufgeschmolzen. Die Schmelze wird innerhalb von 40 min. auf 265 °C erhitzt und nach ca. 7,5 Stunden Polykondensationsdauer aus dem Rührgefäß ausgegossen. Das Copolyamid enthält noch 1,5 % Extrakt. Es weist einen Carboxylgruppengehalt von 76 *µ*equ/g auf und einen Aminogruppengehalt von 48 *µ*equ/g. Die relative Lösungsviskosität beträgt 2,05. Das Copolyamid zeigt einen Schmelzpunkt von 218 °C.

## Patentansprüche

1. Verfahren zur Herstellung thermoplastischer Polymere, die mit modifizierten Schichtsilikaten verstärkt sind, **dadurch gekennzeichnet, dass** als Schichtsilikate durch Ionenaustausch organophil eingestellte Nanopartikel eingesetzt werden, deren an der Oberfläche liegenden Hydroxylgruppen mit Carbonsäuren und/oder Carbonsäureanhydriden und/oder Anhydridgruppen tragenden flüssig-kristallinen Polyesterimidanhydriden verestert sind.

2. Verfahren nach Anspruch 1, **dadurch gekennzeichnet, dass** die modifizierten Schichtsilikate in Mengen von 0,1 bis 50 %, bevorzugt 0,5 bis 5 %, dem Polymerisations- oder Polykondensationsansatz oder den Polymeren zugesetzt werden.

3. Verfahren nach Anspruch 1 oder 2, **dadurch gekennzeichnet, dass** ein durch Kationenaustausch hydrophobiertes, natürliches und/oder synthetisches Schichtsilikat, vorzugsweise Bentonit, eingesetzt wird.

4. Verfahren nach Anspruch 1, **dadurch gekennzeichnet, dass** die Carbonsäure und/oder das Carbonsäureanhydrid Benzol-1,3,5-tricarbonsäure, Benzol-1,2,4-tricarbonsäure oder deren Anhydrid, Benzol-1,2,4,5-tetracarbonsäure oder deren Dianhydrid, 3,4,3',4'-Benzophenontetracarbonsäuredianhydrid, Maleinsäureanhydrid, Pentandisäure, Tetrahydropyran-2,6-dion oder Phthalsäureanhydrid ist.

5. Verfahren nach einem der vorherigen Ansprüche, **dadurch gekennzeichnet, dass** die freien Carbonsäure- oder Carbonsäureanhydridgruppen der modifizierten organophilen Schichtsilikate mit einer Verbindung umgesetzt werden, die zwei oder mehrere Aminogruppen trägt, bevorzugt mit 1,4-Diaminobutan, 1,6-Diaminohexan, 1,8-Diaminooctan, 1,10-Diaminodecan, 1,12-Diaminododecan oder Isophorondiamin.

6. Verfahren nach Anspruch 1 bis 5, **dadurch gekennzeichnet, dass** die Umsetzung der organophilen Schichtsilikate mit den Carbonsäuren und/oder Carbonsäureanhydriden und/oder Anhydridgruppen tragenden flüssig-kristallinen Polyesterimidanhydriden sowie gegebenenfalls der Reaktionsprodukte in zweiter Stufe mit aminogruppenhaltigen Substanzen ' in Lösung oder Dispersion bei Temperaturen zwischen 20 und 200 °C, bevorzugt zwischen 160 und 180 °C, erfolgt.

7. Verfahren nach einem der vorherigen Ansprüche, **dadurch gekennzeichnet, dass** das thermoplastische Polymer ein Polyamid, Polyester oder Polycarbonat oder deren Copolymer ist.

8. Verfahren nach einem der vorherigen Ansprüche, **dadurch gekennzeichnet, dass** zur Bildung des thermoplastischen Polymers Lactame mit ≥ 4 Ringatomen, vorzugsweise ε-Caprolactam, Önanthlactam, Capryllactam oder Lauryllactam, oder polyamidbildenden Kombinationen von C₆-C₁₂-Dicarbonsäuren und/oder cycloaliphatischen und/oder aromatischen Dicarbonsäuren mit C₄-C₁₂-Diaminen und/oder cycloaliphatischen und/oder aromatischen Diaminen oder Mischungen davon, sowie polyesterbildenden Kombinationen von aliphatischen und/oder cycloaliphatischen und/oder aromatischen Dicarbonsäuren und Diolen verwendet werden.

9. Verfahren nach einem der vorherigen Ansprüche, **dadurch gekennzeichnet, dass** das eingesetzte, modifizierte Schichtsilikat in der Lactamschmelze dispergiert wird und der Polymerisationsansatz nach der Methode der hydrolytischen oder anionischen Polymerisation bei Temperaturen zwischen 68 und 300 °C, bevorzugt zwischen 180 und 240 °C, zur Polymerisation gebracht wird.

10. Verfahren nach einem der vorherigen Ansprüche, **dadurch gekennzeichnet, dass** das modifizierte Schichtsilikat als Polymerisationsinitiator dient und dabei in Form von Nanopartikeln mit einem Aspektverhältnis von > 100 kovalent an die sich bildenden Polymerketten angebunden wird.

11. Verfahren nach einem der vorherigen Ansprüche, **dadurch gekennzeichnet, dass** dem Polymerisations- oder Polykondensationsansatz
- Initiatoren, bevorzugt ε-Aminocapronsäure, Aminsalze, Cylohexylaminhydrochlorid oder Wasser,
- Aktivatoren, bevorzugt N-Acetylcaprolactam, N-Caproylcaprolactam oder N,N'-Tetraacetylhexamethylendiamin, und/oder
- Katalysatoren, bevorzugt Alkali- oder Erdalkali-Metalle, -Hydride, -Hydroxide, -Carbonate oder Grignardverbindungen ,
zugegeben werden.

12. Verfahren nach Anspruch 1 bis 10, **dadurch gekennzeichnet, dass** das modifizierte Schichtsilikat entweder zusammen mit Dicarbonsäuren und Diaminen und/oder mit den Salzen aus Diaminen und Dicarbonsäuren und/oder mit Aminosäuren oder mit Dicarbonsäuren und Dihydroxyverbindungen jeweils in einer Polykondensationsreaktion bei Temperaturen von 200 bis 300 °C, vorzugsweise 240 bis 280 °C, in das entstehende Polymere in Form von Nanopartikeln kovalent eingebunden wird.

13. Verfahren nach einem der vorherigen Ansprüche, **dadurch gekennzeichnet, dass** die flüssig-kristallinen Polyesterimidanhydride einen Durchmesser kleiner als 800 nm aufweisen, vorzugsweise kleiner als 400 nm.

14. Verfahren nach einem der vorherigen Ansprüche, **dadurch gekennzeichnet, dass** die nanoverstärkten Polymere, gegebenenfalls mit anderen gleichartigen oder mit ihnen verträglichen Polymeren gemischt, zu Formkörpern, bevorzugt Fasern, Filamenten, Spritzgusskörpern oder Folien, verarbeitet werden.

15. Verfahren nach einem der vorherigen Ansprüche, **dadurch gekennzeichnet, dass** Abfallmaterial aus den nanoverstärkten Polymeren ein- oder mehrfach erneut verformt wird.

## Claims

1. Process for producing thermoplastic polymers reinforced with modified sheet silicates, **characterized in that** the sheet-silicates used are nanoparticles rendered organophilic by ion exchange, the hydroxyl groups on the surface of which are esterified with carboxylic acids and/or carboxylic anhydrides and/or anhydrido-bearing liquid-crystalline polyesterimide anhydrides.

2. Process according to Claim 1, **characterized in that** the modified sheet-silicates are added in amounts of 0.1 to 50% and preferably 0.5 to 5% to the polymerization batch or polymer.

3. Process according to Claim 1 or 2, **characterized in that** the sheet-silicate used is natural and/or synthetic, preferably bentonite, and hydrophobicized by cation exchange.

4. Process according to Claim 1, **characterized in that** the carboxylic acid and/or the carboxylic anhydride is benzene-1,3,5-tricarboxylic acid, benzene-1,2,4-tricarboxylic acid or its anhydride, benzene-1,2,4,5-tetracarboxylic acid or its dianhydride, 3,4',3,4'-benzophenone-tetracarboxylic dianhydride, maleic anhydride, pentanedioic acid, tetrahydropyran-2,6-dione or phthalic anhydride.

5. Process according to any preceding claim, **characterized in that** the free carboxylic acid or anhydride groups on the modified, organophilic sheet-silicates are reacted with a compound bearing two or more amino groups, preferably with 1,4-diaminobutane, 1,6-diaminohexane, 1,8-diaminooctane, 1,10-diaminodecane, 1,12-diaminododecane or isophoronediamine.

6. Process according to any of Claims 1 to 5, **characterized in that** the reaction of the organophilic sheet-silicates with the carboxylic acids and/or anhydrides and/or anhydrido-bearing liquid-crystalline polyesterimide anhydrides and also, if appropriate, of the reaction products in a second step with amino-containing substances take place in solution or dispersion at temperatures between 20 and 200°C and preferably between 160 and 180°C.

7. Process according to any preceding claim, **characterized in that** the thermoplastic polymer is a polyamide, polyester or polycarbonate or copolymer thereof.

8. Process according to any preceding claim, **characterized in that** the thermoplastic polymer is formed using lactams having ≥ 4 ring atoms, preferably ε-caprolactam, enantholactam, capryllactam or lauryllactam or polyamide-forming combinations of C₆-C₁₂-dicarboxylic acids and/or cycloaliphatic and/or aromatic dicarboxylic acids with C₄-C₁₂-diamines and/or cycloaliphatic and/or aromatic diamines or mixtures thereof and also polyester-forming combinations of aliphatic and/or cycloaliphatic and/or aromatic dicarboxylic acids and diols.

9. Process according to any preceding claim, **characterized in that** the modified sheet-silicate used is dispersed in the lactam melt and the polymerization batch is polymerized by the method of hydrolytic or anionic polymerization at temperatures between 68 and 300°C and preferably between 180 and 240°C.

10. Process according to any preceding claim, **characterized in that** the modified sheet-silicate serves as a polymerization initiator and becomes covalently bonded in the form of nanoparticles having an aspect ratio of > 100 to the polymer chains which form.

11. Process according to any preceding claim, **characterized in that** the polymerization batch has added to it
- initiators, preferably ε-aminocaproic acid, amine salts, cyclohexylamine hydrochloride or water,
- activators, preferably N-acetylcaprolactam, N-caproylcaprolactam, or N,N'-tetraacetylhexamethylenediamine,
and/or,
- catalysts, preferably alkali or alkaline earth metals, hydrides, hydroxides, carbonates or Grignard compounds

12. Process according to Claims 1 to 10, **characterized in that** the modified sheet-silicate is covalently bonded in the form of nanoparticles into the resulting polymer either together with dicarboxylic acids and diamines and/or with the salts of diamines and dicarboxylic acids and/or with amino acids or with dicarboxylic acids and dihydroxy compounds each in a polycondensation reaction at temperatures of 200 to 300°C and preferably 240 to 280°C.

13. Process according to any preceding claim, **characterized in that** the liquid-crystalline polyesterimide anhydrides are less than 800 nm and preferably less than 400 nm in diameter.

14. Process according to any preceding claim, **characterized in that** the nano-reinforced polymers, optionally blended with other similar or compatible polymers, are processed into shaped articles, preferably into fibers, filaments, injection moldings or free-standing films.

15. Process according to any preceding claim, **characterized in that** waste material composed of the nano-reinforced polymers is singly or multiply reshaped.

## Revendications

1. Procédé de production de polymères thermoplastiques, qui sont renforcés par des silicates stratifiés modifiés, **caractérisé en ce qu'**on utilise comme silicates stratifiés des nanoparticules réglées au plan organophile par échange ionique, dont les groupements hydroxyle se trouvant à la surface sont estérifiés par des anhydrides de polyestérimides en cristaux liquides portant des acides carboxyliques et/ou des anhydrides d'acides carboxyliques et/ou des groupements anhydride.

2. Procédé selon la revendication 1, **caractérisé en ce que** les silicates stratifiés modifiés sont ajoutés à la fraction de polymérisation ou de polycondensation ou aux polymères en quantités de 0,1 à 50 %, de préférence de 0,5 à 5 %.

3. Procédé selon la revendication 1 ou la revendication 2, **caractérisé en ce qu'**on utilise un silicate stratifié naturel ou synthétique, rendu hydrophobe par échange cationique, de préférence la bentonite.

4. Procédé selon la revendication 1, **caractérisé en ce que** les acides carboxyliques et/ou l'anhydride d'acide carboxylique est ou sont l'acide benzène-1,3,5-tricarboxylique, l'acide benzène-1,2,4-tricarboxylique ou son anhydride, l'acide benzène-1,2,4,5-tétracarboxylique ou son dianhydride, le dianhydride d'acide 3,4,3',4'-benzophénone-tétracarboxylique, l'anhydride d'acide maléique, le diacide pentanoïque, le tétrahydropyrane-2,6-dione ou l'anhydride d'acide phtalique.

5. Procédé selon l'une quelconque des revendications précédentes, **caractérisé en ce que** les groupements libres acide carboxylique ou anhydride d'acide carboxylique des silicates stratifiés organophiles modifiés sont mis en réaction avec un composé qui porte deux groupements amino ou plus, de préférence avec le 1,4-diaminobutane, le 1,6-diaminohexane, le 1,8-diaminooctane, le 1,10-diaminodécane, le 1,12-diaminododécane ou l'isophoronediamine.

6. Procédé selon les revendications 1 à 5, **caractérisé en ce que** la réaction des silicates stratifiés organophiles avec les anhydrides de polyestérimides à cristaux liquides portant des acides carboxyliques et/ou des anhydrides d'acides carboxyliques et/ou des groupements anhydride ainsi qu'éventuellement les produits réactionnels de la deuxième étape avec des substances comprenant des groupements amino se fait en solution ou en dispersion à des températures comprises entre 20 et 200 °C, de préférence entre 160 et 180 °C.

7. Procédé selon l'une quelconque des revendications précédentes, **caractérisé en ce que** le polymère thermoplastique est un polyamide, un polyester ou un polycarbonate ou son copolymère.

8. Procédé selon l'une quelconque des revendications précédentes, **caractérisé en ce que**, pour former le polymère thermoplastique, on utilise des lactames avec ≥ 4 atomes de noyau, de préférence le ε-caprolactame, le lactame oenanthique, le lactame de capryle ou le lactame de lauryle, ou des combinaisons formatrices de polyamides d'acides dicarboxyliques en C₆-C₁₂ et/ou d'acides dicarboxyliques cycloaliphatiques et/ou aromatiques avec des diamines en C₄-C₁₂ et/ou des diamines cycloaliphatiques et/ou aromatiques ou des mélanges de celles-ci, ainsi que des combinaisons formatrices de polyester d'acides dicarboxyliques aliphatiques et/ou cycloaliphatiques et/ou aromatiques et des diols.

9. Procédé selon l'une quelconque des revendications précédentes, **caractérisé en ce que** le silicate stratifié modifié utilisé est dispersé dans la masse fondue de lactame et la fraction de polymérisation, d'après la méthode de polymérisation hydrolytique ou anionique, est soumise à la polymérisation entre 68 et 300 °C, de préférence entre 180 et 240 °C.

10. Procédé selon l'une quelconque des revendications précédentes, **caractérisé en ce que** le silicate stratifié modifié sert d'initiateur de polymérisation et est lié aux chaînes polymères qui se forment par covalence en l'occurrence sous la forme de nanoparticules avec un rapport d'aspect supérieur à 100.

11. Procédé selon l'une quelconque des revendications précédentes, **caractérisé en ce qu'**on ajoute à la fraction de polymérisation ou de polycondensation :
- des initiateurs, de préférence de l'acide ε-aminocaproïque, des sels d'amines, du chlorhydrate de cyclohexylamine ou de l'eau,
- des activateurs, de préférence du N-acétyl-caprolactame, du N-caproylcaprolactame ou de la N,N'-tétraacétylhexaméthylènediamine, et/ou
- des catalyseurs, de préférence des métaux alcalins ou alcalinoterreux, des hydrures, des hydroxydes ou des carbonates de ces mêmes métaux ou encore des composés de Grignard.

12. Procédé selon les revendications 1 à 10, **caractérisé en ce que** le silicate stratifié modifié est lié par covalence sous la forme de nanoparticules dans le polymère produit conjointement avec des acides dicarboxyliques et des diamines et/ou avec les sels de diamines et d'acides dicarboxyliques et/ou avec des acides aminés, ou avec des acides dicarboxyliques et des composés dihydroxylés, respectivement, dans une réaction de polycondensation à des températures de 200 à 300 °C, de préférence de 240 à 280 °C.

13. Procédé selon l'une quelconque des revendications précédentes, **caractérisé en ce que** les anhydrides de polyestérimides à cristaux liquides présentent un diamètre inférieur à 800 nm, de préférence inférieur à 400 nm.

14. Procédé selon l'une quelconque des revendications précédentes, **caractérisé en ce que** les polymères renforcés par nanotechnologie, éventuellement mélangés à d'autres polymères du même type ou compatibles avec eux, sont transformés pour obtenir des corps moulés, de préférence des fibres, des filaments, des corps moulés par injection ou des feuilles.

15. Procédé selon l'une quelconque des revendications précédentes, **caractérisé en ce que** les déchets venant des polymères renforcés par nanotechnologie sont refaçonnés une ou plusieurs fois.
